# EUROPEAN PATENT APPLICATION

(11) **EP 3 260 389 A1**
(43) Date of publication of application: **27.12.2017**
(21) Application number: 17165969.1
(22) Date of filing: 28.02.2012
(51) Int. Cl.: B65D 41/32, B65D 43/02, B65D 51/16

(54) **METHOD OF MANUFACTURING A SCREW CAP, AND A SCREW CAP FOR CLOSING A PRESERVING JAR**

(30) Priority: 01.03.2011 NL 2006323
(62) Divisional of application: 12707952.3
(71) Applicant: E + E Holding BV, 4012 BG Kerk Avezaath (NL)
(72) Inventor: VELTMAN, Peter Jan Marie, 4012 BG Kerk Avezaath (NL)
(74) Representative: De Vries & Metman

(57) **Abstract**

In a method of manufacturing a screw cap (1 )for closing a preserving jar a weakening line (5) which can be broken by means of finger force is applied in the screw cap by removing material from the cap at the intended location of the weakening line so as to obtain a slot (5).

## Description

Method of manufacturing a screw cap, and a screw cap for closing a preserving jar.

The present invention is related to a method of manufacturing a screw cap for closing a preserving jar, wherein a weakening line is provided in the cap which can be broken by means of finger force.

Such a method is known in the prior art. In the known method a weakening line is provided in the cap in order to press the cap open at the weakening line by means of finger force. As a consequence, the content of the closed preserving jar will communicate with the ambient air and the pressure in the preserving jar will be equalized with ambient pressure. It is generally known, that unscrewing of a preserving jar is simplified, because under pressure in the preserving jar pulls the cap against the jar firmly. A disadvantage of the known method is that it is not suitable to manufacture a large number of caps for preserving jars within a limited time period accurately. The accuracy is relevant, since it is not acceptable that at the weakening line leakage to the inner side of the preserving jar arises automatically, neither after a certain period of time after manufacturing a cap that is screwed on a filled jar.

An object of the invention is to provide an efficient method of manufacturing a screw cap which satisfies the requirements of food safety.

This object is achieved by the method according to the invention, wherein at the location where the weakening line is intended material is removed from the cap so as to obtain a slot. In practice the slot is applied at the outer side of the cap. The outer side is the side which is located opposite to the screwing means, hence the side which is located at the outer side when the screw cap is screwed onto the preserving jar.

An advantage of the method according to the invention is that removing the material at the weakening line minimizes local plastic deformation of material. As a consequence, local damage of the cap near the created slot is minimized. Typical techniques which can be used to apply a weakening line, but which can deform the material locally seriously, are punching, stamping, pressing, cutting, scoring, notching, etc. By removing the material from the cap according to the invention the material structure close to the slot can be maintained better.

In practice the material of the cap can be formed from a metal, but alternative types of material are conceivable, as well. Normally the metal is coated by means of a protective layer so as to avoid contact with ambient air and the content of the preserving jar.

Preferably the force that is exerted onto the cap for removing the material from the cap substantially extends within the plane of the cap. In other words, forces in the direction perpendicularly to the plane of the cap are minimal during the treatment. As a consequence, a relatively deep slot can be made in the cap, whereas the risk of preliminary leakage at the weakening line does not become too large. In comparison to for example impressing a sharp subject for creating a weakening line, the risk of piercing too far is much smaller. Such tools, such as for example a knife for pressing, is also sensitive to wear, which requires a relatively broad safety margin.

Removing the material may comprise a non-mechanical treatment, such that forces which are exerted onto the material next to the slot are minimal. In a practical embodiment the non-mechanical treatment comprises a treatment by means of a laser beam. This provides the opportunity to burn away material very locally. By means of a laser beam a very accurate and narrow slot can be obtained. Compared to for example an indentation by means of a sharp knife, the slot that is applied by means of a laser beam can have much steeper side walls, which has a positive influence on the breaking characteristics at the weakening line. Using a laser beam appears to make it possible to provide more than one hundred caps per minute with slots in a cross shape, whereas a great accuracy of the dimensions is obtained.

After manufacturing the slot, it can be coated by applying a coating. As a consequence, contact with ambient air is avoided hence minimizing the risk of corrosion.

The slot maybe applied before the cap has obtained its final shape, for example when the cap still must be cut out of a flat plate or when the cap has already been cut out, but still has to be deformed to a cap including screw means.

The invention is also related to a method of assembling a preserving jar, wherein a screw cap is manufactured according to the method as described hereinbefore, before the screw cap is screwed onto a preserving jar including content. This provides the opportunity to check the cap before it is screwed onto a preserving jar that was filled before. It is also possible to screw the cap onto the preserving jar firstly and then providing the slot. However, this may make monitoring of leakage or almost leakage more difficult.

The invention is also related to a screw cap for closing a preserving jar, which is provided with a slot having a bottom which can be broken at the slot by means of finger force, wherein the slot is made by removing material from the cap locally. As described hereinbefore, the slot may be provided at the outer side of the screw cap. The way in which the slot has been manufactured, can be observed because of the minimal deformation of material close to the slot. In practice a slot which has been manufactured by local deformation, for example by means of pressing, the portion of the bottom below the slot will have a tapered shape. In case of removing material this is not necessary. The side walls of the slot can form a substantially right angle with respect to the plane of the cap, or the angle can be smaller than 20 degrees or 10 degrees, for example. The side walls of the slot may also extend substantially parallel to each other.

In a practical embodiment the width of the slot is smaller than 0.2 mm and lies for example within the range of 50 to 100 micrometer. As seen in cross-section the slot may have a substantially square shape, for example having a width/depth ratio of 0.5-1.5, but alternative ratios are conceivable.

Furthermore, a second slot may be present, which intersects the first slot. The slots may have a cross shape, but alternative shapes are conceivable.

In a specific embodiment the thickness of the portion of the bottom below the slot is smaller than 50% of the thickness of the bottom portion adjacent to the slot, and preferably smaller than 30% or even 20%.

The invention will be elucidated further by means of drawings, which show embodiments of the invention very schematically.
Fig. 1 is a plan view of an embodiment of the screw cap according to the invention.
Fig. 2 is a cross-sectional view of the screw cap according to the line II-II in Fig. 1.
Fig. 3 is a similar view as Fig. 2 according to the line III-III in Fig. 1.
Fig. 4 is a number of plan views of portions of alternative embodiments of the screw cap according to Fig. 1.

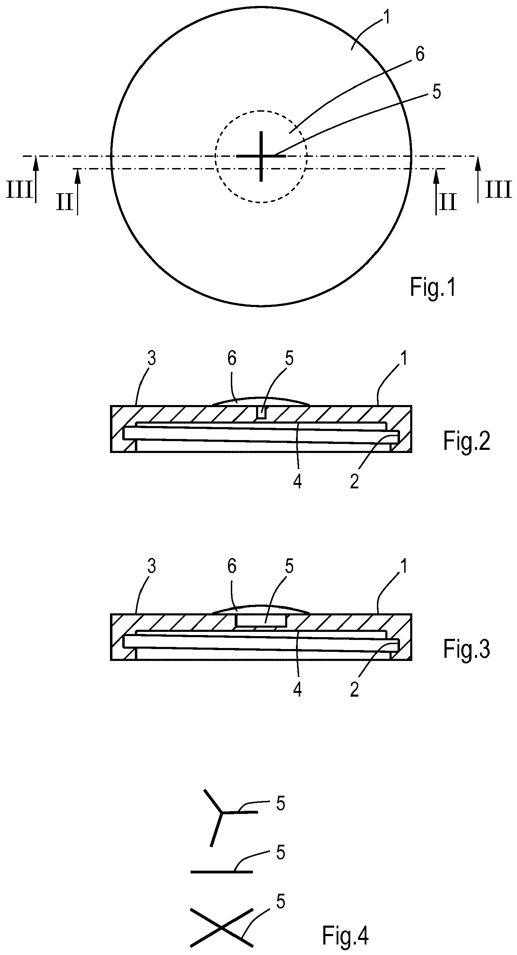

Fig. 1 shows a plan view of an embodiment of a screw cap 1 according to the invention. The screw cap 1 is suitable for closing a preserving jar (not shown). In practice a preserving jar is often a pot of glass, but alternative materials are conceivable, as well.

The screw cap 1 is made of a metal plate and comprises a screw thread 2 are bayonet closing which fits on a screw closing of a preserving jar. A conventional screw cap, and also the embodiment as shown in Fig. 1, is provided with a coating (not shown) at its outer side 3 and its inner side 4 in order to avoid that the ambient air or the content of the preserving jar contacts the metal so as to prevent corrosion thereof.

At its outer side 3 the screw cap 1 is provided with two slots 5 in a cross shape. At the slots 5 the material of the gap 1 has been removed. The depth of the slots 5 has been selected such that the thickness of the bottom portion below the slots 5 is smaller than 50% of the thickness of the bottom portion adjacent to the slots 5, but this can be dependent on the choice of the material of the cap 1. The slots 5 serve as weakening lines in the cap 1 which can be broken by means of finger force. The thickness of the remainder of the bottom portion below the slots 5 can be such that the cap 1 can be opened by adults only.

When the closed preserving jar has to be opened, at first the user can apply a force onto the slots 5 in the direction perpendicularly to the plane of the cap 1. As soon as the bottom portion below the slots 5 obtains a minimal crack are opening, the vacuum below the screw cap 1 will disappear and the screw cap 1 can be screwed open easily from the preserving jar.

The moment when the slots 5 are provided can be different. It is possible to apply the slots 5 before deforming the metal plate to the shape of the screw cap 1, before applying a coating to the inner side 3 and/or the outer side 4 of the screw cap 1, or after screwing the screw cap 1 onto the preserving jar.

In order to create an accurate extent of the bottom below the slots 5, according to the invention material is removed from the cap 1 and the cap is not locally deformed as is the case by punching or scoring, for example. In this case the slots 5 are provided by means of a laser beam. This can be performed at high speed and accurately. The slots 5 can be very narrow and the side walls thereof may extend substantially parallel with respect to each other.

After applying the slots 5 these are covered by applying a coating 6. This prevents the walls of the slots 5 against corrosion, such that at a later stage possible preliminary leakage to the content of the preserving jar could arise.

Fig. 4 shows some alternative shapes of slots 5, as seen at the outer side 3 of the screw cap 1, but numerous alternative shapes are conceivable, such as curved lines, etc.

The invention is not limited to the embodiments as shown in the drawings and described hereinbefore, which can be varied in different ways within the scope of the invention. For example, it is possible to locate the weakening line or weakening lines out of the centre of the cap.

## Claims

1. Method of manufacturing a screw cap (1) for closing a preserving jar, wherein in the cap a weakening line is provided which can be broken by means of finger force, by removing material from the cap (1) at the intended location of the weakening line so as to obtain a slot (5).

2. Method according to claim 1, wherein the force that is exerted onto the cap (1) for removing the material from the cap (1) is directed substantially only within the plane of the cap (1).

3. Method according to claim 1 or 2, wherein the step of removing the material comprises a non-mechanical treatment.

4. Method according to claim 1, wherein the non-mechanical treatment comprises a treatment by means of a laser beam.

5. Method according to one of the preceding claims, wherein the slot (5) is covered by means of applying a coating (6).

6. Method according to one of the preceding claims, wherein the slot (5) is applied before the cap (1) has obtained its final shape.

7. Method according to one of the preceding claims, wherein a second slot is provided which intersects the first slot, wherein the screw cap (1) is made of a metal plate.

8. Method according to claim 7, wherein the slots (5) are provided before applying a coating to the inner side (3) and/or the outer side (4) of the screw cap (1).

9. Method of assembling a preserving jar, wherein a screw cap is manufactured by means of the method according to one of the preceding claims, before the screw cap (1) is screwed onto a preserving jar including content.

10. A screw cap (1) for closing a reserving jar, which is provided with a slot (5) of which the bottom can be broken at the slot (5) by means of finger force, wherein the slot (5) is made by removing material from the cap (1) locally.

11. A screw cap (1) according to claim 10, wherein the width of the slot is smaller than 0.2 mm.

12. A screw cap (1) according to claim 10 or 11, wherein a second slot is present, which intersects the first slot.

13. A screw cap (1) according to claim 12, wherein the slots (5) have a cross shape.

14. A screw cap (1) according to one of the claims 10-13, wherein the thickness of the bottom portion below the slot (5) is smaller than 50% of the thickness of the bottom portion adjacent to the slot (5).
